# EUROPEAN PATENT SPECIFICATION

(11) **EP 1 264 080 B1**
(45) Date of publication and mention of the grant of the patent: **22.12.2004**
(21) Application number: 00913901.5
(22) Date of filing: 13.03.2000
(51) Int. Cl.: F01D 25/16, F16C 21/00

(54) **INTEGRAL BEARING ASSEMBLY FOR A TURBOCHARGER ROTOR**
LAGEREINHEIT FÜR DEN ROTOR EINES TURBOLADERS
MONTAGE A ROULEMENT INTEGRE POUR ROTOR DE TURBOCOMPRESSEUR

(43) Date of publication of application: 11.12.2002
(73) Proprietor: AlliedSignal Inc., Morristown, New Jersey 07962-2245 (US)
(72) Inventor: THOMPSON, Glenn, F., Palos Verdes Estates, CA 90274 (US); MCMULLEN, Robert, J., Farmington Hills, MI 48331 (US)
(74) Representative: Jennings, Guy Kenneth
(86) International application number: PCT/US2000/006511
(87) International publication number: WO 2001/069046

(56) References cited:
- EP-A- 0 339 601
- US-A- 4 460 284
- US-A- 4 808 091
- US-A- 6 032 466

## Description

### FIELD OF THE INVENTION

This invention relates generally to the field of turbochargers and, more particularly, to a bearing rotor assembly used to support a rotating shaft within a turbocharger.

### BACKGROUND OF THE INVENTION

Turbochargers for gasoline and diesel internal combustion engines are known devices used in the art for pressurizing or boosting the intake air stream, routed to a combustion chamber of the engine, by using the heat and volumetric flow of exhaust gas exiting the engine. Specifically, the exhaust gas exiting the engine is routed into a turbine housing of a turbocharger in a manner that causes an exhaust gas-driven turbine to spin within the housing. The exhaust gas-driven turbine is mounted onto one end of a shaft that is common to a radial air compressor mounted onto an opposite end of the shaft. Thus, rotation of the turbine also causes the air compressor to spin within a compressor housing of the turbocharger that is separate from the exhaust housing. The spinning of the air compressor causes intake air to enter the compressor housing and be pressurized or boosted a desired amount before it is mixed with fuel and combusted within the engine combustion chamber.

The common shaft extending between the turbine and compressor is disposed through a turbocharger center housing that includes a bearing assembly for: (1) facilitating shaft rotation ; (2) controlling axially directed shaft thrust effects and radially directed shaft vibrations; and (3) providing necessary lubrication to the rotating shaft to minimize friction effects and related wear. The common shaft as used in turbocharger applications is known to have shaft-rotating speeds on the order of 60,000 to 80,000 rpm. Under such operating conditions it is imperative that the bearing assembly provide sufficient lubrication to the shaft to minimize the extreme friction effects that take place at such high rotating speeds, thereby extending shaft service life.

Bearing assemblies known in the art for turbocharger shaft applications include roller bearings and ball bearings to accommodate the high-speed shaft rotation. However, it has been found that bearing assemblies that make exclusive use of such ball or roller bearings do not provide a desired service life for turbochargers in vehicle applications. Other bearing assemblies known in the art for turbocharger applications make use of sleeve bearings. However, sleeve bearings have been found to be objectionable in such applications because their design do not tolerate a practical degree of shaft imbalance and do not operate to dampen resonant vibrations caused by such imbalance, such imbalance being a characteristic of rotating turbocharger shafts. Further, the inability of such sleeve bearings to accommodate shaft imbalance at such high speeds is known to cause oil film breakdown and metal-to-metal contact, also reducing the shaft operating life.

In an effort to address the disadvantages of these prior art bearing systems, bearing assemblies have been constructed in the form of a free-floating bushing, positioned between the rotating shaft and a stationary housing cavity, that include a roller or ball bearing system. The use of a roller or ball bearing system in conjunction with the free-floating bushing is designed to both provide a desired degree of lubrication to the shaft and to absorb vibration caused by the shaft during rotating movement at such high speeds. Such bearing systems also employ thrust-bearing surfaces to control axial shaft movement during rotary operation.

For example, U.S. Patent No. 4,641,977 discloses a bearing system comprising an anti-friction rolling bearing that cooperates with a full-floating sleeve to carry the rotating turbocharger shaft. More specifically, the bearing system comprises an outer race having an integral one-piece elongated cylindrical outer bearing surface that is adapted to be carried rotatably on a film of lubricant at its interface with the turbocharger housing. The outer race cooperates with a full-floating sleeve at one of its ends and with the roller bearing at an opposite end. The roller bearing is interposed between the outer race and an inner race that is positioned concentrically around the shaft diameter. An end of the outer race adjacent the rolling bearing includes outwardly projecting surfaces that form thrust bearings stationary machine element. The shaft rotates within the assembly between the roller bearing and the full-floating sleeve.

Additional examples of turbochargers employing ball bearing elements in the bearing system include U.S. Patent No. 6,032,466 to Woollenweber et al. and U.S/ Patent No. 4,460,284 to Lauterbach et al. which each disclose a ball bearing cartridge employed in a turbocharger application. Lauterbach discloses use of a ball bearing with a two piece race in combination with a hydrodynamic one piece bearing. Woollenweber disclsoes the use of a rolling bearing in combination with a full floating sleeve brearing.

While the above-discussed bearing system is known to meet the extreme lubrication and damping demands required in turbocharger shaft applications, its design and construction does not lend itself to cost effective production and assembly. Turbochargers for vehicle applications are produced using methods of high-volume manufacturing, thereby requiring that the turbocharger components be constructed in a manner that is consistent with high-efficiency assembly and robotic handling processes.

It is, therefore, desirable that a bearing assembly for use in a turbocharger be constructed in a manner that: (1) meets the lubrication requirements of a rotating turbine shaft under operating conditions; (2) provides necessary damping to a vibrating turbine shaft during operation; (3) provides thrust surfaces to control turbine shaft axial movement during rotary operation; and (4) is constructed in a manner facilitating high-volume manufacturing methods.

### SUMMARY OF THE INVENTION

An integral ball bearing rotor assembly, constructed according to principles of this invention for use with a turbocharger for internal combustion engines, comprises: (1) a rotating journal bearing disposed concentrically within a stationary turbocharger shaft housing bearing assembly cavity and disposed concentrically around a turbine shaft outside diameter; (2) a cylindrical squeeze film damper disposed within the cavity adjacent an end of the rotating journal bearing and disposed concentrically around the turbine shaft; (3) a combination ball bearing outer race/thrust bearing/film damper register element disposed within the cavity at an opposite end of the damper and around the turbine shaft; and (4) ball roller elements interposed between the combination ball bearing outer race element and the turbine shaft. The bearing assembly functions to lubricate the turbine shaft under operating conditions, dampen vibrations caused by the rotating turbine shaft, control axial movement of the turbine shaft during operation, and facilitate high-volume manufacturing methods.

Although bearing assemblies of this invention can be used with any type of high-speed machinery having a shaft that is rotated at high speeds, e.g., 60,000 to 80,000 rpm, they are especially well suited for application within turbochargers for use with internal combustion engines. When placed in turbocharger use, the bearing assembly is disposed within a turbocharger shaft housing around a common rotating shaft having one end attached to a turbine that is disposed within a turbocharger turbine housing, and an opposite end attached to a compressor that is disposed within a turbocharger compressor housing.

The details and features of the present invention will be more clearly understood with respect to the detailed description and the drawing that illustrates a cross-sectional side elevation of a turbocharger bearing assembly constructed according to principles of this invention.

### BRIEF DESCRIPTION OF THE DRAWINGS

The details and features of the present invention will be more clearly understood with respect to the detailed description and the following drawings, wherein:

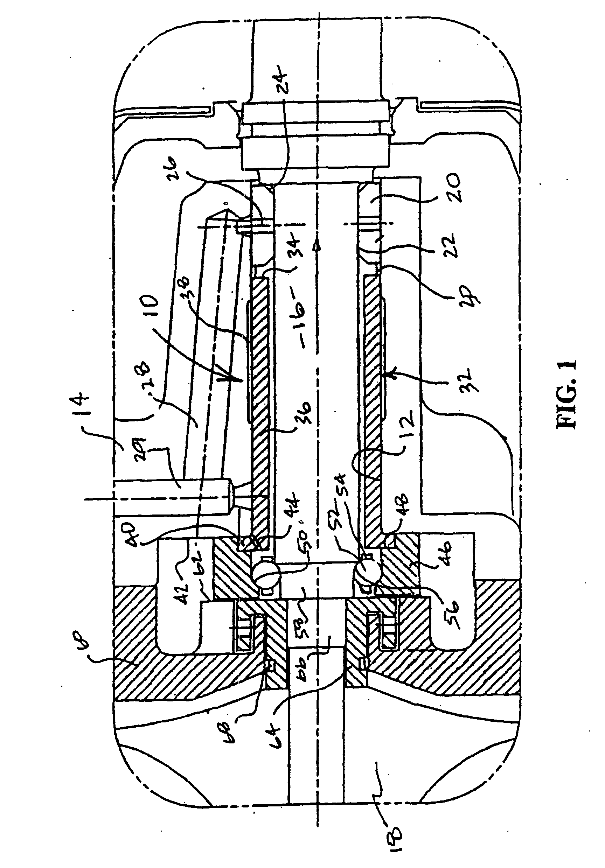

FIG. 1 illustrates a cross-sectional side elevation of a first embodiment turbocharger bearing assembly constructed according to principles of this invention.

### DETAILED DESCRIPTION OF THE INVENTION

Referring now to the drawing, an integral ball bearing rotor assembly 10 of this invention is disposed within a bearing assembly cavity 12 extending through a stationary turbocharger shaft or center housing 14. A common turbine/compressor shaft 16 is disposed within and extends axially through the cavity 12. A turbine (not shown) is attached to one end of the shaft 16 illustrated on the right-hand side of the drawing, and a compressor 18 is attached to an opposite end of the shaft 16 illustrated on the left-hand side of the drawing.

Moving leftwardly from the right-hand side of the drawing, the bearing assembly 10 comprises a turbine side dual film rotating journal bearing 20 disposed concentrically within the cavity 12 and concentrically around an outside shaft diameter 22. The rotating journal bearing can be made from those materials conventionally used in such applications. The rotating journal bearing 20 is in the form of an annular ring that is disposed within the cavity 12 adjacent the turbine side of the shaft 16. The journal bearing 20 includes axially directed surfaces 24 that taper inwardly moving towards the shaft 16 that are designed to minimize the contact surface area between adjacent axial journal bearing and axial shaft surfaces, thereby minimizing unwanted friction and wear effects between these adjacent surfaces.

The journal bearing 20 also includes one or more lubrication passages 26 that extend radially through the journal from the cavity 12 to the outside shaft diameter 22. The journal bearing lubrication passage 26 is positioned over and in fluid communication with an oil passageway 28 through the shaft housing 14 to facilitate the transport of lubricating oil to the rotating journal bearing and shaft and, more specifically, between both the adjacent cavity and rotating journal bearing surfaces, and between the adjacent rotating journal bearing and outside shaft diameter surfaces. Lubrication between the rotating journal bearing and cavity is desired, in addition to providing lubrication to the shaft, because the journal bearing is designed to rotate within the cavity.

Axial placement of the journal bearing 20 inwardly into the cavity 12 from a turbine end of the cavity is limited by ridge 30 (ring spaces) that projects radially inwardly into the cavity. The journal bearing has an outside diameter that is sized to facilitate its rotation within the cavity, and has an inside diameter that is sized to facilitate rotation of the outside shaft diameter therein.

An annular squeeze film damper 32 is disposed concentrically within the cavity 12 and is generally cylindrical in shape. The damper 32 extends axially through the cavity from an end 34 positioned adjacent the journal bearing 20 that abuts the ridge 30 towards a compressor end of the cavity. The damper 32 includes an axially extending wall section 36 having an outside diameter sized to facilitate its rotation within the cavity 12, and has an inside diameter sized larger than the journal bearing inside diameter to facilitate the passage of lubricant between the damper and outside shaft diameter 22 to form a vibration absorbing lubricant film therebetween during shaft rotation. The damper can be formed from materials conventionally used for such applications.

The cavity 12 includes an enlarged diameter section 38 that extends circumferentially around the damper wall 36. A further oil passageway 29 extends through shaft housing 14 to the cavity 12 for transporting lubricant to the damper wall outside surface. Both the cavity enlarged diameter section 38 and the oil passageway 29 are designed to provide lubricant to the damper wall outside diameter to reduce friction during rotation of the damper 32 within the cavity 12.

The damper 32 includes an outwardly turned end 40 at an end of the damper wall 36 opposite end 34 and adjacent the cavity compressor end. The damper end 40 projects radially outwardly to form a damper flange. The damper outwardly turned end or flange 40 includes an axially-facing surface that is positioned against a complementary cavity axially-facing surface 42 adjacent to the compressor 18 that is formed by a radially outwardly extending cavity wall. The damper flange 40 includes a plurality of lubricant passages 44 that extend therethrough from the cavity 12 to the outside shaft diameter 22 and, more specifically, to bearing elements as described below. Lubricant flows from the oil passageway 29 in the shaft housing 14, between the cavity and damper wall outside surface, through the lubricant passages 44 and to the rotating shaft 16 and bearing elements.

A combination bearing element outer race/thrust bearing/damper register 46 is independent from and is positioned adjacent the damper flange 40 along the cavity axially-facing surface 42. The combination outer race 46 can be formed from materials conventionally used to form bearing element outer races for use in such applications. The combination outer race 46 is shaped generally in the form of an annular ring having a notch 48 disposed circumferentially along an axial surface that faces the cavity axially-facing surface 42 to accommodate placement of the damper flange 40 therein. The combination outer race 46 has a generally cylindrical outside diameter surface and has an inside diameter surface having a shoulder 50 that is shaped to both accommodate placement of an outside diameter bearing element surface thereagainst and prevent axial displacement of the bearing elements towards the cavity compressor end. The combination outer race 46 is sized having an inside diameter that is larger than that of the damper 32 to accommodate placement of a plurality of bearing elements between the shaft and the combination outer race.

As mentioned above, a plurality of bearing elements 52 are interposed between the combination outer race 46 inside diameter and the shaft 16. The bearing elements 52 can be made of conventional materials known in the art for use in such applications, and are arranged together by a single-piece bearing element retainer 54 to form an integral bearing element and retainer assembly. The bearing elements 52 are supported along an inside diameter surface by a shoulder 56 formed along a shaft first reduced diameter section 58 that is positioned concentrically within both the bearing elements 52 and combination outer race 46. Together, the combination outer race shoulder 50 and shaft shoulder 56 work to both contain the bearing elements 52 therebetween and control bearing element/shaft axial displacement within the cavity.

The combination outer race 46 is interposed axially between the cavity axially-facing surface 42 on one side and a compressor backplate 60 that is attached to the shaft housing 14. More specifically, the combination outer race is trapped axially between the cavity axially-facing surface 42 on one side and an axial surface 62 of the compressor backplate 60. The combination outer race 46 is free to rotate within the shaft housing. An oil seal ring gland 64 is interposed between the compressor backplate 60 and the combination outer race 46 and also acts to trap the combination outer race axially between the shaft housing and compressor backplate. The oil seal ring gland 64 is disposed concentrically around a shaft second reduced diameter section 66 and includes an annular sealing ring 68, disposed circumferentially around a gland outside diameter, that is interposed between adjacent gland compressor backplate surfaces to form a leak-tight seal therebetween.

A feature of the bearing assembly of this invention is the two-piece construction of the combination outer race element 46 and damper 32 that provides the desired functions of accommodating thrust loads from both the bearing elements and the damper, and facilitates high-volume manufacturing. Specifically, the combination outer race 46 is designed to accommodate thrust loads and act as a thrust bearing for the bearing elements 52 and shaft 16 by its contact with the bearing elements along shoulder 50, thereby preventing shaft axial displacement in the compressor direction. The combination outer race 46 is also designed to accommodate thrust loads and act as a thrust bearing for the damper 32 by its registration with the damper flange 40 within the notch 48, thereby preventing damper axial displacement in the compressor direction. Another feature of the bearing assembly of this invention is the use of an integral bearing element and retainer assembly and use of the shaft itself as the bearing element inner race. Specifically, using an integral bearing element and retainer assembly facilitates assembly of the turbocharger by not having to load each of the bearing elements, e.g., bearing balls, individually, but rather permitting the bearing elements to be loaded in a single, time-saving step. Additionally, the design of forming a bearing element inner race as an integral shoulder of the shaft avoids the need to load a separate inner race onto the shaft during turbocharger assembly, thereby also expediting the manufacturing process.

During turbocharger operation, and rotary movement of the shaft, the integral ball bearing rotor assembly of this invention functions in the following manner. The rotating journal bearing 20 both directs lubricating oil to the shaft and carries the rotational movement of the shaft adjacent the turbine while rotating to a lessor extent within the cavity 12. The damper 32 functions to provide a thin film of lubricating oil between the cavity and damper outside diameter to lubricate rotational damper movement within the cavity. The damper also functions to route lubricating oil from the shaft housing to the bearing elements 52. The combination outer race 46 carries both the radial loads imposed by the bearing elements, and the axial loads that are imposed by the bearing elements from the shaft and by the damper to control shaft and damper axial movement within the shaft housing cavity.

Having now described the invention in detail as required by the patent statutes, those skilled in the art will recognize modifications and substitutions to the specific embodiments disclosed herein. Such modifications are within the scope of the present invention as defined in the following claims.

## Claims

1. A turbocharger for internal combustion engines having a turbine housing;
a compressor housing having a compressor backplate 60 attached thereto;
a shaft housing 14 interposed between the turbine and compressor housing;
a shaft 16 extending through the shaft housing and engaging a turbine at one end extending into the turbine housing, and a compressor 18 at an opposite shaft end extending into the compressor housing;
a bearing assembly disposed within a cavity 12 extending through the shaft housing having an annular rotating journal bearing 20 positioned concentrically around the shaft adjacent the turbine, the turbocharger being **characterized in that** it includes:
an annular rotating squeeze film damper 32 positioned concentrically around the shaft and adjacent an axial end of the rotating journal bearing, the damper including a radially outwardly projecting flange 40 at an axial end opposite the rotating journal bearing;
an annular combination outer bearing element race/thrust bearing 46 disposed concentrically around the shaft and fixedly interposed axially between the damper flange and compressor backplate, the damper flange being contained within a circumferential notch 44 in an axial surface of the combination outer bearing element race/thrust bearing, the notch forming a thrust bearing surface for the damper flange; and
a plurality of ball bearing elements 52 interposed radially between the shaft and the combination outer bearing element race/thrust bearing, the combination outer bearing element race/thrust bearing having a center bore with a shoulder 50 shaped to engage an outside surface of the bearing elements thereagainst, the shaft having a first section 58 with a diameter sized to be received through the center bore of the combination outer bearing element race/thrust bearing and a second section with a shoulder 56 shaped to engage an inside surface of the bearing elements thereagainst,
the shoulder 50 on the combination outer bearing element race/thrust bearing 46 engaging the plurality of bearing elements 52 as an outer race and a reaction surface for thrust loads imposed by the shoulder 56 of the shaft 16 on the bearing elements and the notch 48 providing a reaction surface for thrust loads imposed by the damper 32 to control shaft and damper axial displacement within the shaft housing.

2. The turbocharger as recited in claim 1 wherein the plurality of bearing elements include a bearing element retainer that forms an integral bearing element assembly.

3. The turbocharger as recited in claim 1 wherein the rotating journal bearing and damper each include means for delivering lubricating oil from the shaft housing cavity to the shaft.

## Patentansprüche

1. Turbolader für Verbrennungsmotoren mit einem Turbinengehäuse;
einem Kompressorgehäuse mit einer daran befestigten Kompressorgrundplatte 60;
einem zwischen dem Turbinen- und dem Kompressorgehäuse angeordneten Wellengehäuse 14;
einer sich durch das Wellengehäuse erstreckenden Welle 16, die an einem sich in das Turbinengehäuse erstreckenden Ende eine Turbine und an einem gegenüberliegenden, sich in das Kompressorgehäuse erstreckenden Wellenende einen Kompressor 18 in Eingriff nimmt;
einer in einem sich durch das Wellengehäuse erstreckenden Hohlraum 12 angeordneten Lageranordnung, die ein ringförmiges rotierendes Zapfenlager 20 aufweist, das konzentrisch um die Welle herum neben der Turbine angeordnet ist,
**dadurch gekennzeichnet, dass** er Folgendes umfasst:
einen ringförmigen rotierenden Quetschfilmdämpfer 32, der konzentrisch um die Welle herum und neben einem axialen Ende des rotierenden Zapfenlagers angeordnet ist, wobei der Dämpfer einen radial nach außen ragenden Flansch 40 an einem dem rotierenden Zapfenlager gegenüberliegenden axialen Ende enthält;
eine ringförmige Kombination aus Lagerelementaußenring/Drucklager 46, die konzentrisch um die Welle herum angeordnet und axial zwischen dem Dämpferflansch und der Kompressorgrundplatte festgelegt angeordnet ist, wobei der Dämpferflansch in einer Umfangskerbe 44 in einer Axialfläche der Kombination aus Lagerelementaußenring/Drucklager enthalten ist, wobei die Kerbe eine Drucklagerfläche für den Dämpferflansch bildet; und
mehrere Kugellagerelemente 52, die radial zwischen der Welle und der Kombination aus Lagerelementaußenring/Drucklager angeordnet sind, wobei die Kombination aus Lagerelementaußenring/Drucklager eine mittlere Bohrung mit einer Schulter 50 aufweist, die zum Angreifen einer Außenfläche der Lagerelemente daran geformt ist, wobei die Welle einen ersten Abschnitt 58 mit einem Durchmesser, der zur Aufnahme durch die mittlere Bohrung der Kombination aus Lagerelementaußenring/Drucklager bemessen ist, und einen zweiten Abschnitt mit einer Schulter 56, die zum Angreifen einer Innenfläche der Lagerelemente daran geformt ist, aufweist,
wobei die Schulter 50 an der Kombination aus Lagerelementaußenring/Drucklager 46 die mehreren Lagerelemente 52 als ein Außenring und eine Reaktionsfläche für durch die Schulter 56 der Welle 16 auf die Lagerelemente ausgeübte Drucklasten in Eingriff nimmt, und die Kerbe 48 eine Reaktionsfläche für durch den Dämpfer 32 ausgeübte Drucklasten bereitstellt, um eine axiale Wellen- und Dämpferverschiebung im Wellengehäuse zu steuern.

2. Turbolader nach Anspruch 1, bei dem die mehreren Lagerelemente einen Lagerelementhalter enthalten, der eine integrale Lagerelementanordnung bildet.

3. Turbolader nach Anspruch 1, bei dem das rotierende Zapfenlager und der Dämpfer jeweils Mittel zur Zuführung von Schmieröl aus dem Wellengehäusehohlraum zur Welle enthalten.

## Revendications

1. Turbocompresseur pour moteurs à combustion interne comprenant :
un carter de turbine ;
un carter de compresseur ayant un flasque de compresseur 60 attaché à celui-ci ;
un logement d'arbre 14 interposé entre le carter de turbine et le carter de compresseur ;
un arbre 16 s'étendant à travers le logement d'arbre et engageant une turbine à une extrémité s'étendant dans le carter de turbine, et un compresseur 18 à une extrémité opposée de l'arbre s'étendant dans le carter de compresseur ;
un ensemble palier disposé à l'intérieur d'une cavité 12 s'étendant à travers le logement d'arbre comprenant un palier lisse annulaire rotatif 20 positionné concentriquement autour de l'arbre adjacent à la turbine, le turbocompresseur étant **caractérisé en ce qu'**il comporte :
un coussin fluide amortisseur annulaire rotatif 32 positionné concentriquement autour de l'arbre et
adjacent à une extrémité axiale du palier lisse rotatif, ce coussin amortisseur comportant une bride 40 saillant radialement vers l'extérieur à une extrémité axiale opposée au palier lisse rotatif ;
une combinaison annulaire d'une bague de roulement extérieure d'un élément de portée et d'un palier de poussée 46 disposée concentriquement autour de l'arbre et interposée fixement axialement entre la bride du coussin amortisseur et le flasque de compresseur, la bride du coussin amortisseur étant contenue dans une encoche circonférentielle 44 dans une surface axiale de la combinaison de bague de roulement extérieure d'un élément de portée et d'un palier de poussée, l'encoche formant une surface de palier de poussée pour la bride du coussin amortisseur ; et
une pluralité d'éléments de portée 52 interposés radialement entre l'arbre et la combinaison de bague de roulement extérieure d'un élément de portée et d'un palier de poussée, la combinaison de bague de roulement extérieure d'un élément de portée et d'un palier de poussée ayant un alésage central avec un épaulement 50 formé de manière à engager contre lui une surface extérieure des éléments de portée, l'arbre ayant une première section 58 avec un diamètre dimensionné de façon à être reçu à travers l'alésage central de la combinaison de bague de roulement extérieure d'un élément de portée et d'un palier de poussée, et une deuxième section avec un épaulement 56 formé de manière à engager contre lui une surface intérieure des éléments de portée,
l'épaulement 50 sur la combinaison de bague de roulement extérieure d'un élément de portée et d'un palier de poussée 46 engageant la pluralité d'éléments de portée 52 comme une bague de roulement extérieure et une surface de réaction aux charges de poussée imposées par l'épaulement 56 de l'arbre 16 sur les éléments de portée, et l'encoche 48 constituant une surface de réaction aux charges de poussée imposées par le coussin amortisseur 32 pour contrôler le déplacement axial de l'arbre et du coussin amortisseur dans le logement d'arbre.

2. Turbocompresseur selon la revendication 1, dans lequel la pluralité d'éléments de portée inclut un élément de retenue d'élément de portée qui forme un ensemble élément de portée intégral.

3. Turbocompresseur selon la revendication 1, dans lequel le palier lisse rotatif et le coussin amortisseur comportent chacun des moyens pour diriger l'huile de lubrification de la cavité du logement d'arbre vers l'arbre.
